# EUROPEAN PATENT APPLICATION

(11) **EP 2 724 685 A1**
(43) Date of publication of application: **30.04.2014**
(21) Application number: 11868393.7
(22) Date of filing: 04.08.2011
(51) Int. Cl.: A61C 7/14, A61C 7/12, A61C 7/28

(54) **PERSONALIZED ORTHODONTIC APPLIANCE HAVING ORTHOAXIS FUNCTION**

(30) Priority: 23.06.2011 CN 201110171170
(71) Applicant: Guangzhou Riton Biomaterial Co., Ltd., Guangzhou, Guangdong 510380 (CN)
(72) Inventor: HUANG, Weihong, Guangzhou Guangdong 510380 (CN); LIN, Jiuxiang, Guangzhou Guangdong 510380 (CN); ZHU, Shengji, Guangzhou Guangdong 510380 (CN); LIN, Fengyan, Guangzhou Guangdong 510380 (CN); LI, Zu'an, Guangzhou Guangdong 510380 (CN)
(74) Representative: Cabinet Laurent & Charras
(86) International application number: PCT/CN2011/078035
(87) International publication number: WO 2012/174777

(57) **Abstract**

The present invention discloses an individualized orthodontic appliance with axis correction functions, comprising No. 1-7 individualized lingual brackets connected in series by an archwire. Each individualized lingual bracket includes a base plate and a bracket body connected with the base plate. In the No. 1-7 individualized lingual brackets, the underside of the bracket body of at least two of the individualized lingual brackets is disposed with a crimpable hook with a through hole and the through holes are connected in series by an ortho-axial wire. In this invention, the underside of the bracket body is disposed with the crimpable hook with the through hole and the ortho-axial wire is used to pass through the through holes. In this way, the underside of the bracket body can produce the corresponding orthodontic force while the crown of tooth is moving during the orthodontic treatment. The positions of the teeth roots can also be gradually corrected. It prevents teeth from inclining when they move far from the center; therefore the correction function is achieved. The structure of the individualized orthodontic appliance provided by the invention is simple and ingenious, the axis correction function is excellent and it is applicable to patients with dental extraction in the individualized orthodontic treatment.

## Description

### FIELD OF THE INVENTION

The present invention relates to an individualized orthodontic appliance to correct teeth.

### BACKGROUND OF THE INVENTION

Individualized orthodontic appliances have been widely used by more and more patients. The individualized orthodontic lingual brackets ("lingual brackets") are connected in series by an archwire. Each lingual bracket is made based on different size of tooth pattern. Different number of tooth is provided with the corresponding lingual bracket, whose structure includes a base plate attached to the teeth and a bracket body forming a whole part with the base plate. The teeth are numbered as follows: central incisor is tooth No. 1, the second molar is tooth No. 7 and so on, and therefore the lingual bracket is numbered from 1-7.

In orthodontic treatment, there is a case about dental extraction. In other words, after one tooth is removed, the rest teeth need to be adjusted again to close the interdental spaces. In spite of labial or lingual orthodontics, dental extraction is inevitable and canine tooth (tooth No. 3) is likely to incline while it is moving far away from the center. In the treatment, if the crown of tooth No. 3 inclines under the orthodontic force, the tooth root also moves accordingly to contact with the adjacent tooth to close the interdental space caused by dental extraction. The type of treatment method is called axis correction. In lingual orthodontics, a dual groove or an ortho-axial spring are generally used to achieve axis correction function. But as the bracket body is thin and inclined and the carina of the front molar is generally higher than that of the canine tooth, a curve will be formed between the front molar and the canine tooth, so that the dual groove and the ortho-axial spring are unable to be used. Until now, individualized orthodontic appliances still have no axis correction functions.

### SUMMARY OF THE INVENTION

The objective of the present invention is to provide an individualized orthodontic appliance with axis correction functions.

The solution of the present invention to solve the technical problems is as follows:
An individualized orthodontic appliance, comprising No. 1-7 individualized lingual brackets connected in series by an archwire. Each individualized lingual bracket includes a base plate and a bracket body that is connected with the base plate. In the No. 1-7 individualized lingual brackets, the underside of the bracket body of at least two of the individualized lingual brackets is disposed with a crimpable hook with a through hole and the through holes are connected in series by an ortho-axial wire.

As an improvement to the foregoing technical solution, each bracket body of the No. 1-6 individualized lingual brackets is disposed with a crimpable hook and the bracket body of the No. 7 individualized lingual bracket is disposed with an imperforate crimpable hook.

As an improvement to the foregoing technical solution, each bracket body of the No. 1-6 individualized lingual brackets is disposed with an upper wing and a groove underneath the upper wing, and the bracket body of the No. 7 individualized lingual bracket is disposed with a square channel.

As an improvement to the foregoing technical solution, the height of two sidewalls of the groove of the No. 3 individualized lingual bracket is higher than that of the archwire.

As an improvement to the foregoing technical solution, the axes of the through holes are at the same plane and form a continuous arc.

As an improvement to the foregoing technical solution, the section of the ortho-axial wire is in the shape of a circle and the diameter of the through hole matches that of the ortho-axial wire.

As an improvement to the foregoing technical solution, the width of the bracket body of the No. 3 individualized lingual bracket is 1-3 mm and that width is smaller than the width of the bracket body of the No. 1 and 2 individualized lingual brackets.

As an improvement to the foregoing technical solution, the length of the crimpable hook of the No. 1-6 individualized lingual brackets is 1-3 mm.

Advantages of the invention are summarized below: in the invention, the underside of the bracket body is disposed with a crimpable hook with a through hole and an ortho-axial wire is used to pass through the through holes. The underside of the bracket body will produce the corresponding orthodontic force while the crown of tooth is moving during the treatment. It can also correct the teeth root positions and prevent teeth from inclining when teeth are moving far from the center. As a result, axis correction functions are achieved. The structure of the individualized orthodontic appliance provided by the invention is simple and axis correction functions are excellent and it is applicable to patients with dental extraction in the individualized orthodontic treatment.

### BRIEF DESCRIPTION OF THE DRAWINGS

The present invention is described in further below with reference to the accompanying drawings and embodiments.
FIG. **1** is a state diagram when an individualized orthodontic appliance provided by the invention applies to the teeth after dental extraction, showing No. 1, 2, 3, 5 and 6 tooth positions (No. 4 and 7 tooth positions not shown);
FIG. **2** is a structural representation of No. 3 individualized lingual bracket of the invention;
FIG. **3** is a structural representation of No. 1 and 2 individualized lingual brackets of the invention;
FIG. **4** is a structural representation of No. 7 individualized lingual bracket of the invention;
FIG. **5** is a schematic diagram of the usual fitting method of an archwire; and
FIG. 6 is a schematic diagram of the folding method of the archwire.

### DETAILED DESCRIPTION OF THE EMBODIMENTS

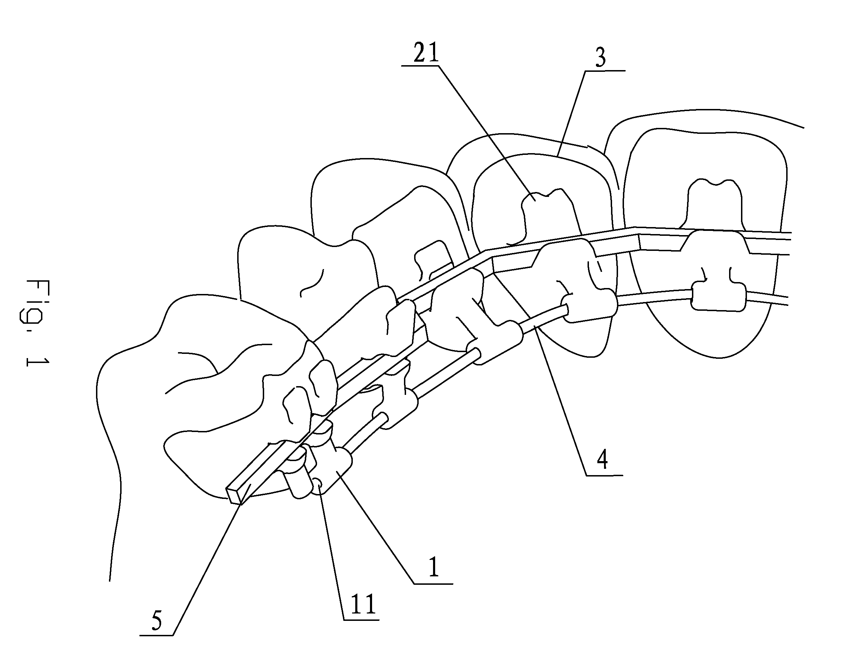

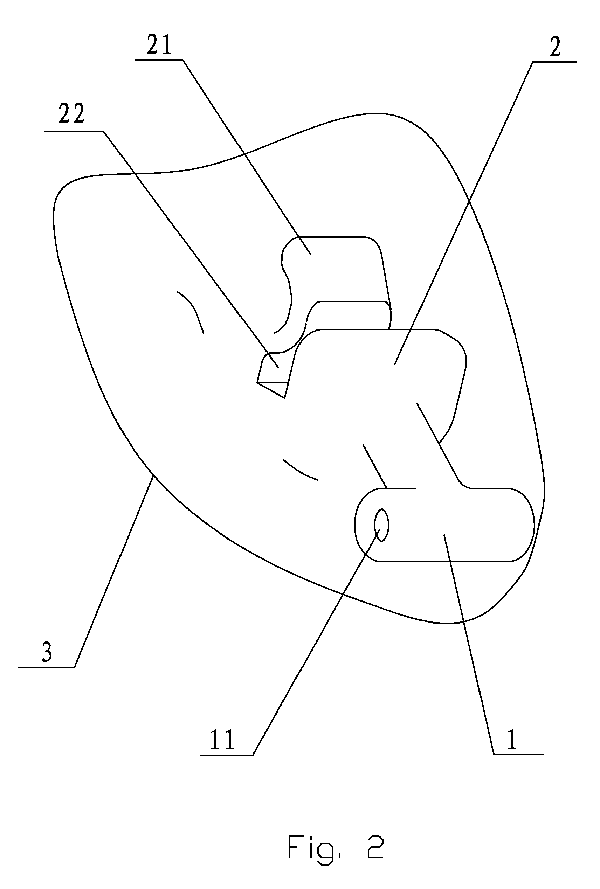

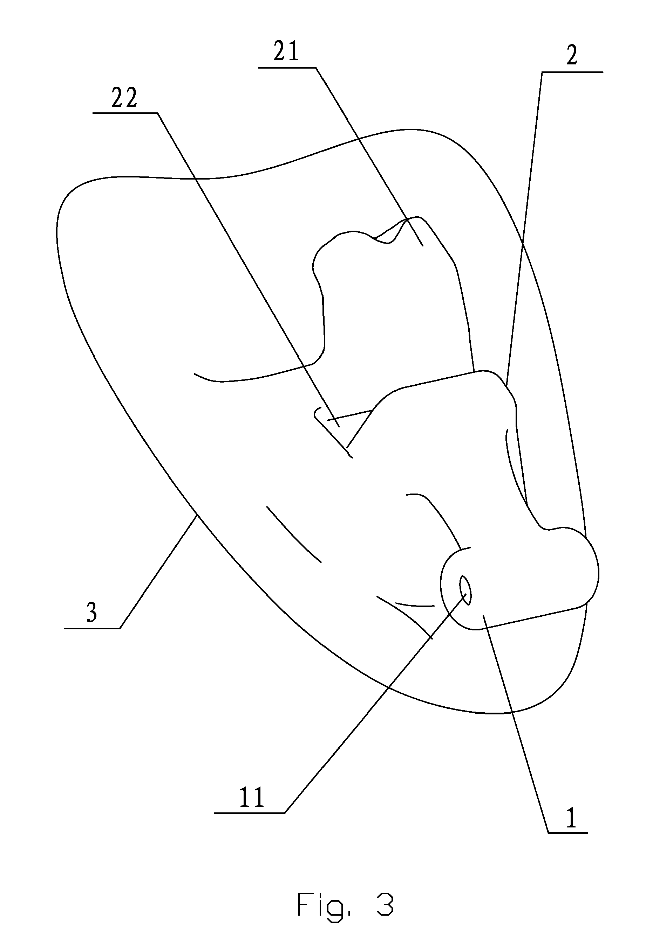

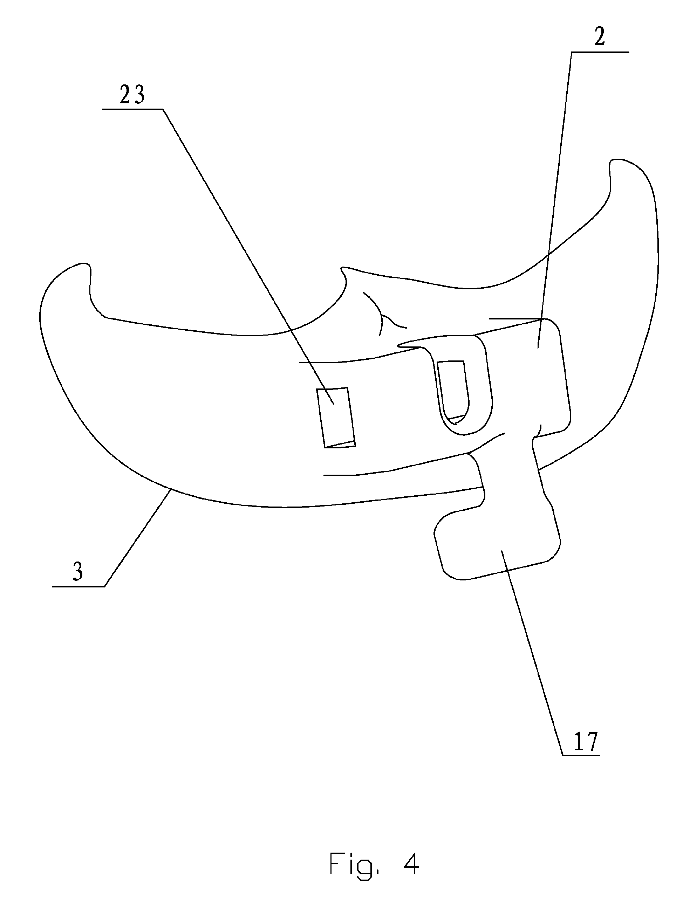

As shown in FIGS. **1-4**, an individualized orthodontic appliance with axis correction functions comprises No. **1-7** individualized lingual brackets connected in series by an archwire **5**. Each individualized lingual bracket includes a base plate **3** and a bracket body **2** connected with the base plate **3**. In the No. **1-7** individualized lingual brackets, the underside of the bracket body **2** of at least two of the individualized lingual brackets is disposed with a crimpable hook **1** with a through hole **11** and the through holes **11** are connected in series by an ortho-axial wire **4**. Specifically, the bracket body **2** and the base plate **3** are formed as a whole. The ortho-axial wire **4** is a 0.012-0.018 inch round nickel-titanium wire or round stainless wire. The section of the ortho-axial wire **4** can also be in the other shapes, but preferably the circle.

As a further preferred embodiment, each bracket body **2** of the No. **1-6** individualized lingual brackets is disposed with the crimpable hook **1** and the bracket body **2** of the No. 7 individualized lingual bracket is disposed with an imperforate crimpable hook **17**. It should be noted that the ortho-axial wire **4** may not be used on No. 7 tooth position because the bracket on No. **6** tooth position has one crimpable hook **1** near the central direction and one lower wing far from the central position (i.e. No. 7 tooth position), and they will block the ortho-axial wire **4** from continuously extending to the No. 7 tooth position. Consequently, the bracket structure of the No. 7 tooth position may use the structure of the conventional individualized lingual bracket with the imperforate crimpable hook **17**.

As a further preferred embodiment, each bracket body 2 of the No. **1-6** individualized lingual brackets is disposed with an upper wing **21** and a groove **22** underneath the upper wing **21**, and the bracket body **2** of the No. 7 individualized lingual bracket is disposed with a square channel **23**. The archwire **5** is embedded in the groove **22**, passes through the square channel **23** and fitted.

As a further preferred embodiment, the height of two sidewalls of the groove **22** of the No. **3** individualized lingual bracket is higher than that of the archwire **5**.

It is noted that the height of two sidewalls of the groove **22** higher than that of the archwire **5** means that it is higher than the height (generally the archwire **5** replaced the last time) of any of the replaced archwire **5** in the orthodontic treatment. In the orthodontic treatment, different thickness of the archwire **5** will be replaced during the progress of the treatment. Generally the height of the archwire **5** is gradually increased and the height of the last replaced archwire **5** is the highest. The height of two sidewalls of the groove **22** of the No. **3** individualized lingual bracket needs to be higher than the last archwire **5**. It can ensure that the groove **22** has a space at the above during the orthodontic treatment. Any archwire **5** can be embedded in the groove **22** to make the tooth No. **3** upright.

As a further preferred embodiment, the axes of the through holes **11** are at the same plane and form a continuous arc. In this way, the ortho-axial wire **4** is easy to pass through all the through holes **11**.

As a further preferred embodiment, the section of the ortho-axial wire **4** is in the shape of a circle and the diameter of the through hole **11** matches that of the ortho-axial wire **4**.

As a further preferred embodiment, the width of the bracket body 2 of the No. **3** individualized lingual bracket is 1-3 mm and that width is smaller than the width of the bracket body 2 of the No. **1** and **2** individualized lingual brackets.

As a further preferred embodiment, the length of the crimpable hook **1** of the No. **1-6** individualized lingual brackets is 1-3 mm.

Specifically, the position of the groove **22** of each bracket and the position of the through hole **11** can be precisely located in a design software and they form a whole 3D CAD model together with the 3D CAD model of the base place **3**. Afterwards, the actual lingual brackets are made by means of rapid prototyping technology. The ortho-axial wire **4** can be bent based on exported data in accordance with the position of the through hole 11 of the crimpable hook **1** during the design. The ortho-axial wire can be bent manually or mechanically.

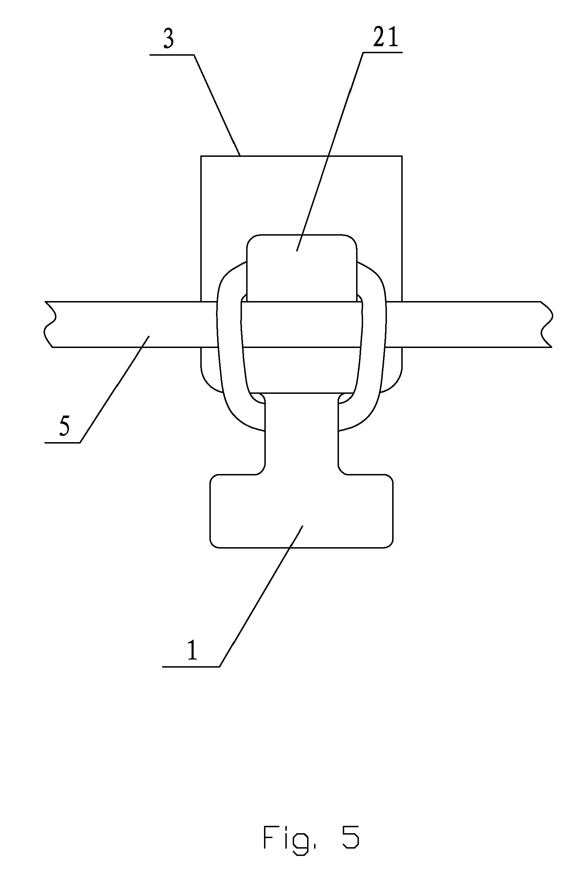

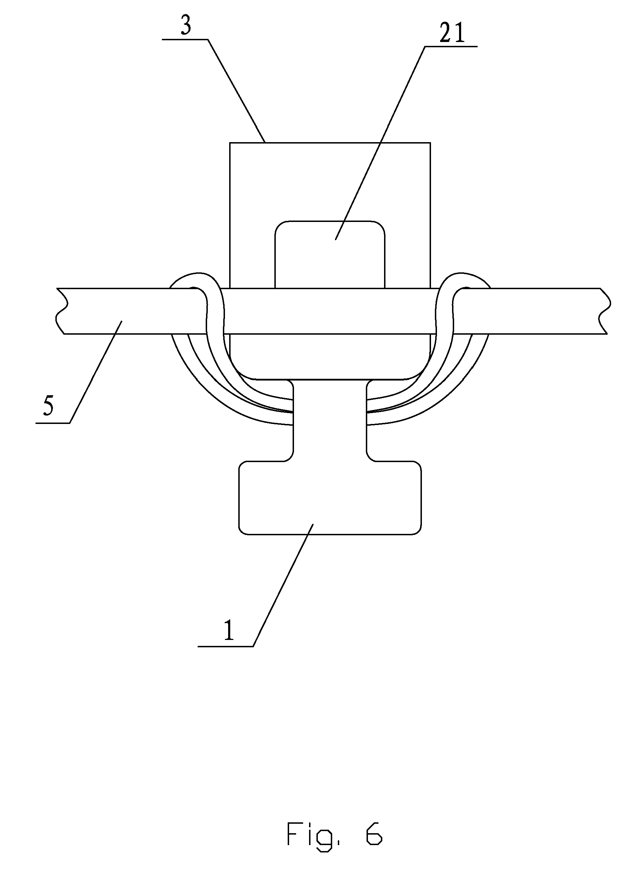

In the early stage of the orthodontic treatment, both the groove **22** and the through hole **11** are placed with corresponding archwire **5** and ortho-axial wire **4**. At the position of the No. **3** individualized lingual bracket, i.e. position of canine tooth, as the width of the groove **22** is small and sidewalls of the groove **22** are higher the archwire **5**, if the common fitting method (see FIG. **5**) is applied, it can prevent the fitting wire to contact with the archwire **5** to produce self-locking sliding and allows teeth to rapidly incline. The ortho-axial wire **4** placed in the crimpable hook **1** is able to effectively correct teeth through the torque provided by two adjacent tooth positions. After the teeth are corrected, the archwire **5** of the canine tooth and the groove **22** can cooperate together to precisely adjust the teeth by means of folding method (see FIG. **6**).

Additionally, the individualized orthodontic appliance of the invention is designed by CAD software. During the design, the positions of both the groove and the through hole 11 of the crimpable hook **1** can be precisely controlled by the software. After the design, the individualized lingual brackets can be made by means of rapid prototyping technology, which is quick and the results are extremely accurate. Meanwhile, the positions of the groove **22** and the through hole **11** can be determined by the exported data so as to precisely bend the archwire **5** and the ortho-axial wire **4**. Consequently, not only the archwire **5** of the obtained orthodontic appliance can accurately match the groove **22** but the ortho-axial wire **4** can accurately match the through hole **11**. The accurate orthodontic treatment and teeth correction function are achieved.

The foregoing descriptions are detailed descriptions of the preferred embodiments and they are not intended to limit the invention. Those skilled in the art can make changes and modifications without departing from the spirit of the invention and equivalent changes and modifications are encompassed in the appended claims.

## Claims

1. An individualized orthodontic appliance with axis correction functions, comprising:
No. **1-7** individualized lingual brackets connected in series by an archwire (**5**);
each individualized lingual bracket including a base plate (**3**) and a bracket body (**2**) connected with the base plate (**3**);
wherein in the No. **1-7** individualized lingual brackets, the underside of the bracket body (**2**) of at least two of the individualized lingual brackets is disposed with a crimpable hook (**1**) with a through hole (**11**) and the through holes (**11**) are connected in series by an ortho-axial wire (**4**).

2. The individualized orthodontic appliance with axis correction functions according to claim 1, wherein each bracket body (**2**) of the No. **1-6** individualized lingual brackets is disposed with the crimpable hook (**1**) and the bracket body (**2**) of the No. 7 individualized lingual bracket is disposed with an imperforate crimpable hook (**17**).

3. The individualized orthodontic appliance with axis correction functions according to claim 2, wherein each bracket body (**2**) of the No. **1-6** individualized lingual brackets is disposed with an upper wing (**21**) and a groove (**22**) underneath the upper wing (**21**), and the bracket body (**2**) of the No. 7 individualized lingual bracket is disposed with a square channel (**23**).

4. The individualized orthodontic appliance with axis correction functions according to claim 3, wherein the height of two sidewalls of the groove (**22**) of the No. **3** individualized lingual bracket is higher than that of the archwire (**5**).

5. The individualized orthodontic appliance with axis correction functions according to any of claims **1-4**, wherein the axes of the through holes (**11**) are at the same plane and form a continuous arc.

6. The individualized orthodontic appliance with axis correction functions according to claim 5, wherein the section of the ortho-axial wire (**4**) is in the shape of a circle and the diameter of the through hole (**11**) matches that of the ortho-axial wire (**4**).

7. The individualized orthodontic appliance with axis correction functions according to claim 6, wherein the width of the bracket body (**2**) of the No. **3** individualized lingual bracket is 1-3 mm and that width is smaller than the width of the bracket body (**2**) of the No. **1** and **2** individualized lingual brackets.

8. The individualized orthodontic appliance with axis correction functions according to claim 6, wherein the length of the crimpable hook (**1**) of the No. **1-6** individualized lingual brackets is 1-3 mm.
